# EUROPEAN PATENT APPLICATION

(11) **EP 4 280 238 A1**
(43) Date of publication of application: **22.11.2023**
(21) Application number: 21924218.7
(22) Date of filing: 26.09.2021
(51) Int. Cl.: H01F 27/29, H01F 27/28, H02J 50/00, H01F 38/14

(54) **COIL MODULE, COIL ENCAPSULATION STRUCTURE, AND WIRELESS CHARGING DEVICE**

(30) Priority: 03.02.2021 CN 202120322918 U
(71) Applicant: Huawei Technologies Co., Ltd., Shenzhen, Guangdong 518129 (CN)
(72) Inventor: LIU, Xiaogang, Shenzhen, Guangdong 518129 (CN); GONG, Lexing, Shenzhen, Guangdong 518129 (CN); JIANG, Fan, Shenzhen, Guangdong 518129 (CN); WANG, Le, Shenzhen, Guangdong 518129 (CN); YU, Zhenqi, Shenzhen, Guangdong 518129 (CN)
(74) Representative: Huawei European IPR
(86) International application number: PCT/CN2021/120745
(87) International publication number: WO 2022/166221

(57) **Abstract**

A coil module includes a coil, a magnetic conductive sheet, and an adapter plate. The magnetic conductive sheet is disposed on the coil. The adapter plate is disposed on the coil and is electrically connected to the coil. The adapter plate is configured to connect the coil. Through addition of the adapter plate, the adapter plate is first connected to the coil. The adapter plate is used for transition connection, to prevent a fault such as falling or poor contact of the coil, making it possible to implement integrated packaging of the coil module. This application further provides a coil packaging structure and a wireless charging apparatus.

## Description

### TECHNICAL FIELD

This application relates to the field of wireless charging, and in particular, to a coil module, a coil packaging structure, and a wireless charging apparatus.

### BACKGROUND

With the wide application of consumer electronic products and the change of people's requirement for charging scenarios of such products, people have increasingly higher requirements for performance such as convenience, timeliness, and universality of charging. The traditional way of charging through a port is no longer sufficient to meet diverse charging needs. Non-contact wireless charging becomes a new trend, and wireless charging is increasingly widely used in terminal products.

In an existing terminal device, because a coil needs to be soldered to a mainboard through a leading wire, a fault such as falling or poor contact may easily occur in a use scenario such as falling or vibration. Because a magnetic shielding material is stress-sensitive, residual stress in a packaging process causes deterioration of coil performance. Therefore, a wireless charging coil module and a packaging structure of the wireless charging coil module each exist independently, and the coil module is bonded and fixed through a double-sided tape or the like. As a result, the charging module is far away from a transmitting end, and charging efficiency is affected. In addition, space utilization inside the device is low, and a coil diameter size is limited, affecting stacking and thickness of the entire device.

### SUMMARY

In view of this, it is necessary to provide a coil module, a coil packaging structure, and a wireless charging apparatus, so as to improve charging efficiency.

According to a first aspect of embodiments of this application, a coil module is provided, including a coil, a magnetic conductive sheet, and an adapter plate. The magnetic conductive sheet is disposed on the coil. The adapter plate is disposed on the coil and is electrically connected to the coil. The adapter plate is configured to connect the coil.

Through addition of the adapter plate, the adapter plate is first connected to the coil, and then the coil is connected to another external structure such as a mainboard through the adapter plate. Because the coil is not directly connected to the outside by welding, the adapter plate is used for transition connection, to prevent a fault such as falling or poor contact of the coil in a use scenario such as falling or vibration, making it possible to implement integrated packaging of the coil module.

In a possible design of the first aspect, the magnetic conductive sheet is attached to one side of the coil. By attaching the magnetic conductive sheet to the coil, the magnetic conductive sheet can be stably connected to the coil.

In a possible design of the first aspect, an avoidance opening is provided on the magnetic conductive sheet. The avoidance opening is configured to avoid the adapter plate disposed on the coil.

In a possible design of the first aspect, the adapter plate is attached to the side of the coil on which the magnetic conductive sheet is disposed, and is accommodated in the avoidance opening. A thickness of the coil module can be reduced by disposing the adapter plate and the magnetic conductive sheet on the same side.

In a possible design of the first aspect, the adapter plate includes an adapter portion, and the adapter portion is configured to connect the coil. The adapter portion is configured to be electrically connected to another external structure such as a mainboard or an entire system end.

In a possible design of the first aspect, the adapter portion is disposed on a side of the adapter plate facing away from the coil. The adapter portion is disposed on the side of the adapter plate facing away from the coil, to facilitate connection with the outside world.

In a possible design of the first aspect, the adapter portion is provided with a spring, a pogopin, a conductive adhesive, a pressure welding spot, or a conducting wire. An electrical connection form can be flexibly selected through a plurality of forms of settings.

In a possible design of the first aspect, the coil is formed by winding a conducting wire.

In a possible design of the first aspect, an outlet form of the conducting wire on the coil may be a single-side outlet or a two-side outlet. Different outlet forms may correspond to different types of adapter plates.

In a possible design of the first aspect, a winding structure of the conducting wire may be a single-layer winding structure, a multi-layer winding structure, a single-strand winding structure, a multi-strand winding structure, or the like.

In a possible design of the first aspect, a cross section of the conducting wire may be in a shape of a circle, a square, or an ellipse.

In a possible design of the first aspect, the conducting wire is an enameled wire. The enameled wire can achieve simple insulation.

In a possible design of the first aspect, a connecting piece is disposed on the adapter plate, and an outlet end of the conducting wire is connected to the connecting piece.

In a possible design of the first aspect, a material of the magnetic conductive sheet may be a single-layer or a plurality of layers of nano-crystals, a ferrite material, or silicon steel.

In a possible design of the first aspect, the magnetic conductive sheet is connected to the coil through an adhesive layer.

In a possible design of the first aspect, a projection of the magnetic conductive sheet completely covers a projection of the coil, that is, a width of the magnetic conductive sheet is greater than or equal to a width of the coil, so that the magnetic conductive sheet completely covers one side of the coil.

In a possible design of the first aspect, a shape of the avoidance opening is similar to a shape of the adapter plate, so that the adapter plate is completely accommodated in the avoidance opening, and an area of the side of the coil covered by the magnetic conductive sheet is maximum, to achieve a greatest magnetic shielding effect on the coil.

According to a second aspect of embodiments of this application, a coil packaging structure is provided, including a housing, a coil module, and a protection component, where the coil module and the protection component are packaged in the housing, the housing includes a first injection molded part and a second injection molded part that are connected to each other, the coil module is the coil module according to the first aspect and any one of the possible designs of the first aspect, the magnetic conductive sheet is disposed on the first injection molded part, and the protection component is configured to isolate the coil from the second injection molded part. The first injection molded part and the second injection molded part are formed by performing injection molding twice successively.

In the coil packaging structure, the protection component is disposed on the coil module, to eliminate an internal stress during injection molding of the second injection molded part, so that the stress-sensitive magnetic conductive sheet is not affected, and performance of the coil module is not affected. In this way, integration of the coil module and the packaging structure of the coil module is implemented while the performance of the coil module is ensured, thereby significantly improving space utilization inside a device and reducing a thickness of the device, and improving charging efficiency of the device through a coil of a larger size. In addition, a contact area between the coil module and the housing is increased, so that heat dissipation efficiency in a charging process of the device can be further improved.

In a possible design of the second aspect, an injection molding method includes but is not limited to insert injection molding, two-color injection molding, ceramic nano injection molding, and glass nano injection molding.

In a possible design of the second aspect, an accommodation groove is provided on the first injection molded part, the accommodation groove is configured to accommodate the coil module, and the magnetic conductive sheet is disposed on a bottom wall of the accommodation groove. The accommodation groove is provided to facilitate accommodating of the magnetic conductive sheet, and prevent the second injection molded part from affecting the magnetic conductive sheet.

In a possible design of the second aspect, the protection component is disposed on a side of the coil module facing away from the first injection molded part, and covers the accommodation groove. The protection component covering the accommodation groove may isolate the coil module from the second injection molded part.

In a possible design of the second aspect, a high temperature resistant material such as a glass fiber plate, a polycarbonate plate, a polymethyl methacrylate plate, a polyformaldehyde plate, a PEEK plate, or a nylon plate may be selected as a material of the protection component.

In a possible design of the second aspect, the protection component wraps the coil module, and the protection component is accommodated in the accommodation groove. The wrapping protection component can directly cover the coil module for isolation.

In a possible design of the second aspect, the protection component is formed outside the coil module through injection molding.

In a possible design of the second aspect, the protection component is formed outside the coil module by coating.

According to a third aspect of embodiments of this application, a wireless charging apparatus is provided, where the wireless charging apparatus uses the coil packaging structure according to the second aspect and any one of the possible designs of the second aspect.

### BRIEF DESCRIPTION OF DRAWINGS

FIG. 1 is a schematic diagram of a structure of a coil module according to a first embodiment of this application;
FIG. 2 is a partially exploded perspective view of the coil module shown in FIG. 1;
FIG. 3 is a schematic diagram of a structure of a coil module according to a second embodiment of this application;
FIG. 4 is a schematic diagram of a structure of a coil module according to a third embodiment of this application;
FIG. 5 is a schematic diagram of a structure of a coil packaging structure according to a fourth embodiment of this application;
FIG. 6 is a partially exploded perspective view of the coil packaging structure shown in FIG. 5;
FIG. 7 is a sectional view of the coil packaging structure shown in FIG. 5 along VII-VII; and
FIG. 8 is a sectional view of a coil packaging structure according to a fifth embodiment of this application.

**DESCRIPTION OF MAIN COMPONENT SYMBOLS**

| | |
|---|---|
| Coil module | 100, 200, 300 |
| Coil | 10 |
| Conducting wire | 11 |
| Magnetic conductive sheet | 20 |
| Avoidance opening | 21 |
| Adhesive layer | 22 |
| Adapter plate | 30 |
| Connecting piece | 31 |
| Adapter portion | 32 |
| Connecting layer | 33 |
| Coil packaging structure | 400, 500 |
| Housing | 41 |
| First injection molded part | 411 |
| Second injection molded part | 412 |
| Accommodation groove | 413 |
| Protection component | 42 |

The present invention is further described in the following specific embodiments with reference to the accompanying drawings.

### DESCRIPTION OF EMBODIMENTS

The following describes the technical solutions in embodiments of this application with reference to the accompanying drawings in the embodiments of this application.

The following terms "first", "second", and the like are merely used for a purpose of description, and shall not be understood as an indication or implication of relative importance or implicit indication of a quantity of indicated technical features. Therefore, a feature limited by "first ", "second" and the like may explicitly indicate or implicitly include one or more such features. In the descriptions of this application, unless otherwise stated, "a plurality of" means two or more. Orientation terms such as "up", "down", "left", and "right" are defined relative to an orientation in which a component is schematically placed in the accompanying drawings. It should be understood that these directional terms are relative concepts and are used for relative description and clarification. These directional terms may vary accordingly depending on an orientation in which the components are placed in the accompanying drawings.

In this application, unless otherwise explicitly specified and limited, a term "connection" should be understood in a broad sense. For example, the "connection" may be a fixed connection, a detachable connection, or an integrated connection; and may be a direct connection or an indirect connection through an intermediate medium. The term "and/or" used in this specification includes any and all combinations of one or more related listed items.

When the following embodiments are described in detail with reference to schematic diagrams, for ease of description, a diagram indicating a partial structure of a component is partially enlarged not based on a general scale. In addition, the schematic diagrams are merely examples, and should not limit the protection scope of this application herein.

### Embodiment 1

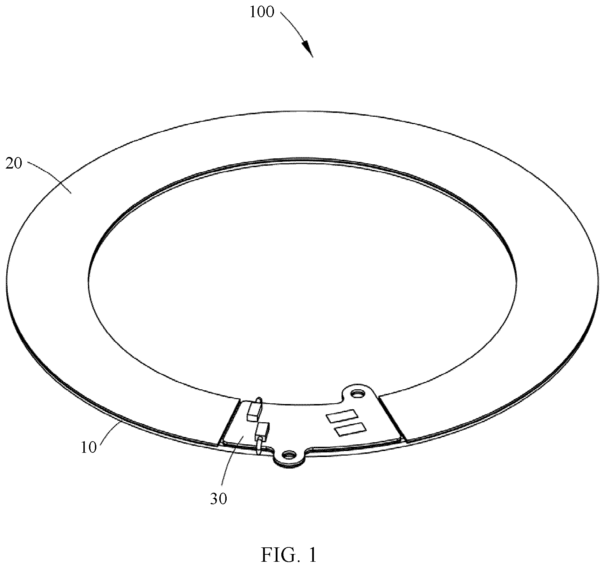

FIG. 1 shows a coil module 100 according to a first embodiment of this application. The coil module 100 may be used in an electronic device, and in particular, used in a terminal device with a wireless charging function.

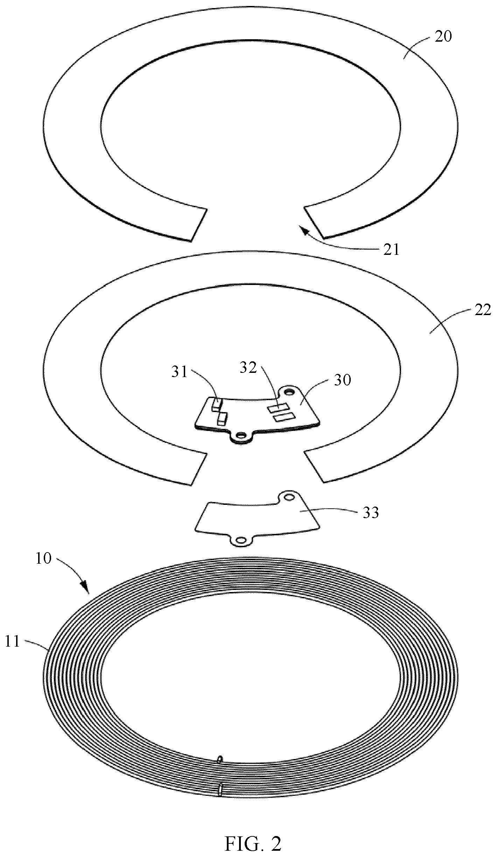

Referring to FIG. 2, the coil module 100 includes a coil 10, a magnetic conductive sheet 20, and an adapter plate 30. The magnetic conductive sheet 20 and the adapter plate 30 are disposed on the coil 10. The magnetic conductive sheet 20 is configured to shield a magnetic field generated by the coil 10, so that the magnetic field generated by the coil 10 is concentrated on a side away from the magnetic conductive sheet 20. A terminal of the coil 10 is electrically connected to the adapter plate 30. The adapter plate 30 is configured to connect the coil 10, so that the coil 10 is electrically connected to another structure.

The coil 10 is approximately annular.

The coil 10 is formed by winding a conducting wire 11 in a plane, and there is at least one layer of conducting wire 11 in a thickness direction.

A winding structure of the conducting wire 11 may be a single-layer winding structure, a multi-layer winding structure, a single-strand winding structure, a multi-strand winding structure, or the like.

A cross section of the conducting wire 11 may be in a shape of a circle, a square, an ellipse, or the like.

The conducting wire 11 is made of an insulated cable, for example, an enameled wire.

An outlet form of the conducting wire 11 on the coil 10 may be a single-side outlet or a two-side outlet.

The magnetic conductive sheet 20 is an annular shape similar to that of the coil 10.

The magnetic conductive sheet 20 is attached to one side of the annular coil 10.

An avoidance opening 21 is provided on the magnetic conductive sheet 20. The avoidance opening 21 is configured to avoid the adapter plate 30 disposed on the coil 10. An outlet end of the conducting wire 11 on the coil 10 is located at the avoidance opening 21.

A magnetic conductive material such as a single-layer or a plurality of layers of nano-crystals material, a ferrite material, or silicon steel may be selected as a material of the magnetic conductive sheet 20.

The magnetic conductive sheet 20 is connected to the coil 10 through an adhesive layer 22.

Preferably, a shape of the adhesive layer 22 is similar to a shape of the magnetic conductive sheet 20, so that the magnetic conductive sheet 20 is stably bonded to the coil 10.

In this embodiment, the adhesive layer 22 uses a high temperature resistant double-sided tape. However, this is not limited thereto. In another embodiment, the adhesive layer 22 may also use another bonding material such as a thermosetting adhesive.

In a thickness direction, a projection of the magnetic conductive sheet 20 completely covers a projection of the coil 10, that is, a width of the magnetic conductive sheet 20 is greater than or equal to a width of the coil 10, so that the magnetic conductive sheet 20 completely covers one side of the coil 10.

The adapter plate 30 is attached to the side of the coil 10 on which the magnetic conductive sheet 20 is disposed, and is accommodated in the avoidance opening 21.

The adapter plate 30 may use a printed circuit board (PCB), a flexible printed circuit board (FPC), a rigid-flex board, or the like.

A connecting piece 31 is disposed on the adapter plate 30. The outlet end of the conducting wire 11 on the coil 10 is connected to the connecting piece 31, so that the coil 10 is connected to the adapter plate 30.

In this embodiment, the connecting piece 31 is disposed on a side of the adapter plate 30 facing away from the coil 10.

The outlet end of the conducting wire 11 may be disposed on the connecting piece 31 by welding, for example, pressure welding or brazing.

The adapter plate 30 includes an adapter portion 32. The adapter portion 32 is configured to connect the coil 10, so that the coil 10 is electrically connected to another external structure such as a mainboard or an entire system end.

In this embodiment, the adapter portion 32 is disposed on a side of the adapter plate 30 on which the connecting piece 31 is disposed, that is, disposed on the side of the adapter plate 30 facing away from the coil 10.

The adapter portion 32 is a connection region reserved on the adapter plate 30. In this embodiment, the adapter portion 32 is a copper exposed region, and may be electrically connected to the outside in various conduction manners, for example, through a conductive adhesive, pressure welding, or a conducting wire.

The adapter plate 30 is disposed on the coil 10 through the connecting layer 33.

Preferably, a shape of the connecting layer 33 is similar to a shape of the adapter plate 30, so that the adapter plate 30 is stably bonded to the coil 10.

In this embodiment, the connecting layer 33 uses a same high temperature resistant double-sided tape as the adhesive layer 22. However, this is not limited thereto. In another embodiment, the connecting layer 33 may also use another bonding material such as a thermosetting adhesive.

In the thickness direction, a projection of a main body of the adapter plate 30 is completely located in the projection of the coil 10, that is, a width of the adapter plate 30 is less than or equal to the width of the coil 10, so that the adapter plate 30 is stably bonded to one side of the coil 10.

In this embodiment, a shape of the avoidance opening 21 is similar to the shape of the adapter plate 30, so that the adapter plate 30 is completely accommodated in the avoidance opening 21, and an area of the side of the magnetic conductive sheet 20 covering the coil 10 is maximum, to achieve a greatest magnetic shielding effect on the coil 10.

In the foregoing coil module 100, through addition of the adapter plate 30, the adapter plate 30 is first connected to the outlet end of the coil 10, and then the coil is connected to another external structure such as the mainboard through the adapter plate 30. Because the coil 10 is not directly connected to the outside by welding, the adapter plate 30 is used for transition connection, so that a fault such as falling or poor contact of the coil 10 may not easily occur in a use scenario such as falling or vibration, making it possible to implement integrated packaging of the coil module 100.

### Embodiment 2

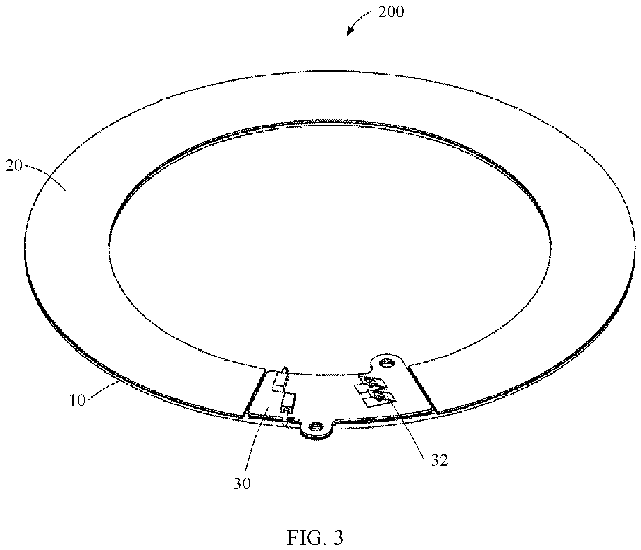

As shown in FIG. 3, a second embodiment of this application further provides a coil module 200. A structure of the coil module 200 is the same as that of the coil module 100, and the coil module 200 includes a coil 10, a magnetic conductive sheet 20, and an adapter plate 30. A main difference from the coil module 100 in the first embodiment shown in FIG. 1 lies in that a structure of an adapter portion 32 is different.

Specifically, in the coil module 200, the adapter portion 32 is a spring disposed on the adapter plate 30. The spring is connected to the adapter plate 30 in a manner such as welding or screw fixing. The adapter plate 30 is connected to the outside through the spring.

In the foregoing coil module 200, through the adapter portion 32 in the form of the spring, the adapter plate 30 can be elastically connected to another external structure such as a mainboard, so that connection stability can be further improved, and a fault such as falling or poor contact of the coil 10 can be prevented in a use scenario such as falling or vibration.

### Embodiment 3

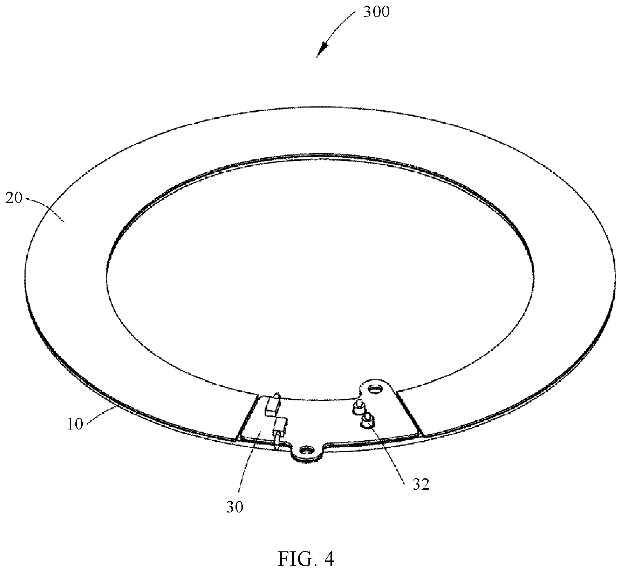

As shown in FIG. 4, a third embodiment of this application further provides a coil module 300. A structure of the coil module 300 is the same as that of the coil module 100, and the coil module 300 includes a coil 10, a magnetic conductive sheet 20, and an adapter plate 30. A main difference from the coil module 100 in the first embodiment shown in FIG. 1 lies in that a structure of an adapter portion 32 is different.

Specifically, in the coil module 300, the adapter portion 32 is a pogopin (Pogopin) disposed on the adapter plate 30. The pogopin is connected to the adapter plate 30 in a manner such as welding, screw fixing, or direct threaded connection. The adapter plate 30 is connected to the outside through the pogopin.

In the foregoing coil module 300, through the adapter portion 32 in the form of the pogopin, the adapter plate 30 can be elastically connected to another external structure such as a mainboard, so that connection stability can be further improved, and a fault such as falling or poor contact of the coil 10 can be prevented in a use scenario such as falling or vibration.

### Embodiment 4

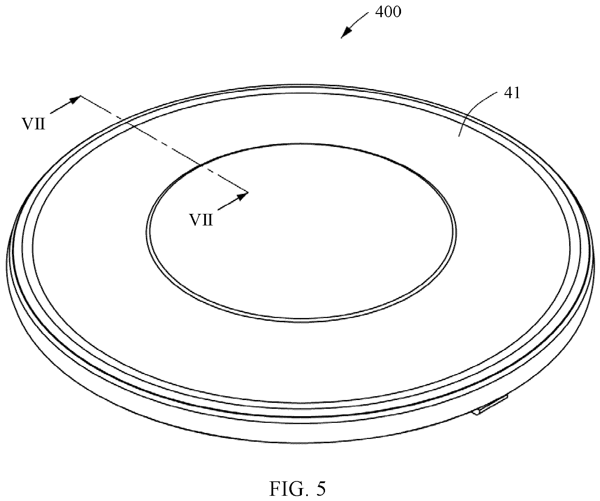

As shown in FIG. 5, a fourth embodiment of this application further provides a coil packaging structure 400. The coil packaging structure 400 may be configured to perform packaging processing on the foregoing coil modules 100, 200, and 300.

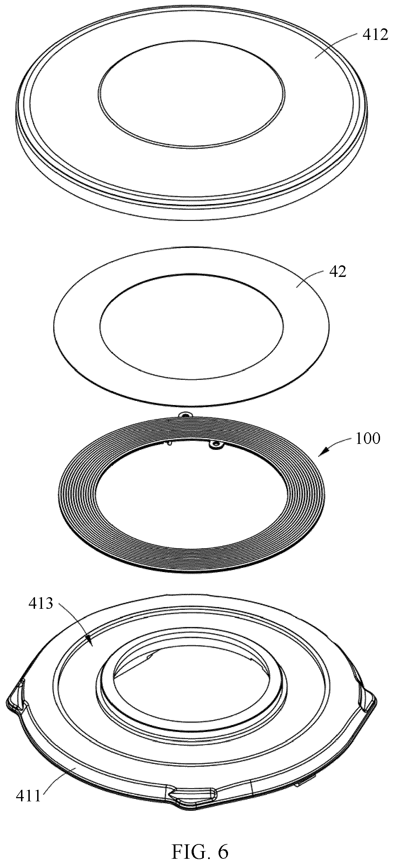

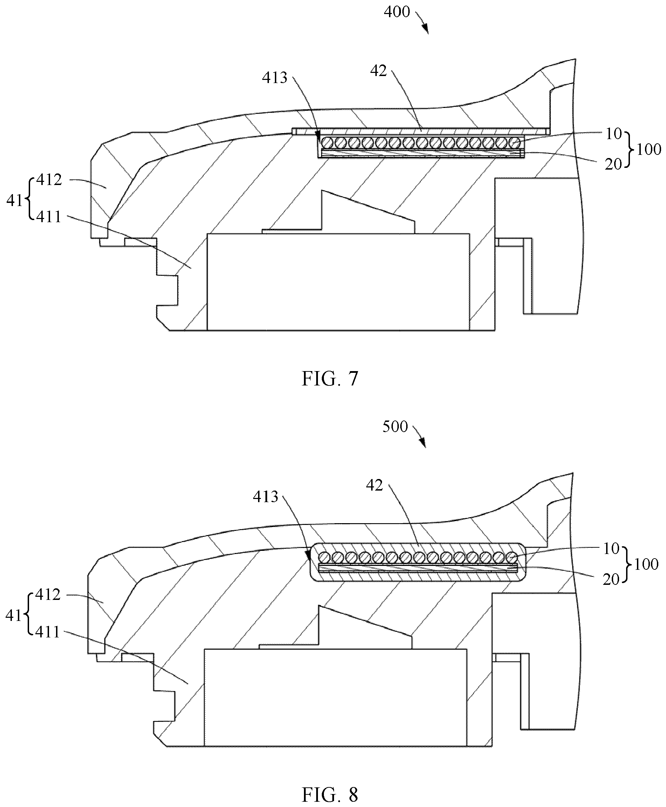

Referring to both FIG. 6 and FIG. 7, the coil packaging structure 400 includes a housing 41, a coil module 100, and a protection component 42. The coil module 100 and the protection component 42 are packaged in the housing 41.

The housing 41 includes a first injection molded part 411 and a second injection molded part 412. The first injection molded part 411 and the second injection molded part 412 are connected to each other.

The first injection molded part 411 and the second injection molded part 412 are formed by performing injection molding twice successively. An injection molding method includes but is not limited to insert injection molding, two-color injection molding, ceramic nano-molding, and glass nano-molding.

An accommodation groove 413 is provided on the first injection molded part 411. A shape of the accommodation groove 413 is similar to a shape of the coil module 100. The accommodation groove 413 is configured to accommodate the coil module 100. A magnetic conductive sheet 20 in the coil module 100 is disposed on a bottom wall of the accommodation groove 413.

The protection component 42 is disposed on a side of the coil module 100 facing away from the first injection molded part 411, and covers the accommodation groove 413.

A high temperature resistant material such as a glass fiber plate (Glass Fiber, GF), a polycarbonate plate, a polymethyl methacrylate plate, a polyformaldehyde plate, a PEEK plate, or a nylon plate may be selected as a material of the protection component 42.

The second injection molded part 412 is disposed on the first injection molded part 411 and covers the protection component 42.

In a width direction, a width of the accommodation groove 413 is greater than or equal to a width of the coil module 100, so that the coil module 100 may be disposed in the accommodation groove 413.

In a thickness direction, a depth of the accommodation groove 413 is greater than or equal to a thickness of the coil module 100, so that the coil module 100 is completely disposed in the accommodation groove 413.

n the thickness direction, a projection of the protection component 42 completely covers a projection of the accommodation groove 413, that is, a width of the protection component 42 is greater than or equal to the width of the accommodation groove 413, to completely cover the accommodation groove 413, so that the coil module 100 is isolated from the second injection molded part 412.

During manufacturing, the first injection molded part 411 is first formed through injection molding, and then the coil module 100 is pasted in the accommodation groove 413 of the first injection molded part 411; then the protection component 42 is pasted on a side of the coil module 100 facing away from the first injection molded part 411 and covers the accommodation groove 413, and finally, the second injection molded part 412 is formed through injection molding on the first injection molded part 411.

In this embodiment, the depth of the accommodation groove 413 is equal to the thickness of the coil module 100, the protection component 42 is an annular plate, and the protection component 42 directly covers an opening of the accommodation groove 413. It may be understood that, in another embodiment, the thickness of the coil module 100 may be further less than the depth of the accommodation groove 413, and the protection component 42 may also be a plate with one side protruding outwards. The protrusion of the protection component 42 is accommodated in the accommodation groove 413, so as to facilitate positioning of the protection component 42, and a remaining part covers the opening of the accommodation groove 413.

In the coil packaging structure 400, the protection component 42 is disposed on the coil module 100, to eliminate an internal stress during injection molding of the second injection molded part 412, so that the stress-sensitive magnetic conductive sheet 20 is not affected, and performance of the coil module 100 is not affected. In this way, integration of the coil module 100 and the packaging structure of the coil module 100 is implemented while the performance of the coil module 100 is ensured, thereby significantly improving space utilization inside a device and reducing a thickness of the device, and improving charging efficiency of the device through a coil of a larger size. In addition, a contact area between the coil module and the housing 41 is increased, so that heat dissipation efficiency in a charging process of the device can be further improved.

### Embodiment 5

As shown in FIG. 8, a fifth embodiment of this application further provides a coil packaging structure 500. The coil packaging structure 500 may be configured to perform packaging processing on the foregoing coil modules 100, 200, and 300. The coil packaging structure 500 has the same structure as that of the coil packaging structure 400, and includes a housing 41, a coil module 100, and a protection component 42. A main difference from the coil packaging structure 400 in the fourth embodiment shown in FIG. 5 lies in that a structure of the protection component 42 is different.

Specifically, the protection component 42 in the coil packaging structure 500 is formed by a high temperature resistant adhesive film, a high temperature resistant soft adhesive, or the like.

The protection component 42 wraps a surface of the coil module 100.

The protection component 42 is accommodated in the accommodation groove 413, and isolates the coil module 100 from the second injection molded part 412.

The protection component 42 may be directly formed outside the coil module 100 through injection molding.

The protection component 42 formed through the injection molding may be thermoplastic polyester (Polyethylene terephthalate, PET), silica gel, thermoplastic polyurethane elastomer (Thermoplastic polyurethanes, TPU), fluorine rubber, thermoplastic elastomer (Thermoplastic Elastomer, TPE), or the like.

The protection component 42 may be further formed by coating the outside of the coil module 100 with a glue.

The protection component 42 formed by the coated glue may be a hot melt glue, an epoxy glue, silica gel, an AB glue, a quick drying glue, or the like.

In a width direction, the protection component 42 wrapping on the surface of the coil module 100 may completely fill the accommodation groove 413, so that the second injection molded part 412 is formed on the surfaces of the first injection molded part 411 and the protection component 42 through injection molding.

During manufacturing, the first injection molded part 411 is first formed through injection molding, then the protection component 42 is formed through injection molding or coating outside the coil module 100, and the coil module 100 with the protection component 42 is pasted in the accommodation groove 413 of the first injection molded part 411, so that the magnetic conductive sheet 20 is close to a bottom wall of the accommodation groove 413. Finally, the second injection molded part 412 is formed on the first injection molded part 411 through injection molding.

It may be understood that, in another embodiment, the protection component 42 may also partially wrap the coil module 100, provided that the coil module 100 can be isolated from the second injection molded part 412 during the injection molding of the second injection molded part 412.

This application further provides a wireless charging apparatus. The wireless charging apparatus uses the foregoing coil packaging structures 400 and 500.

The wireless charging apparatus may be a portable device or a charging device.

The foregoing description is merely specific implementations of this application, but is not intended to limit the protection range of this application. Any variations or replacements within the technical scope disclosed in this application shall fall within the protection scope of this application.

## Claims

1. A coil module, comprising a coil and a magnetic conductive sheet, wherein the magnetic conductive sheet is disposed on the coil, and the coil module further comprises:
an adapter plate, wherein the adapter plate is disposed on the coil and is electrically connected to the coil, and the adapter plate is configured to connect the coil.

2. The coil module according to claim 1, wherein the magnetic conductive sheet is attached to one side of the coil.

3. The coil module according to claim 2, wherein an avoidance opening is provided on the magnetic conductive sheet.

4. The coil module according to claim 3, wherein the adapter plate is attached to the side of the coil on which the magnetic conductive sheet is disposed, and is accommodated in the avoidance opening.

5. The coil module according to claim 4, wherein the adapter plate comprises an adapter portion, and the adapter portion is configured to connect the coil.

6. The coil module according to claim 5, wherein the adapter portion is disposed on a side of the adapter plate facing away from the coil.

7. The coil module according to claim 5, wherein the adapter portion is provided with a spring, a pogopin, a conductive adhesive, a pressure welding spot, or a conducting wire.

8. The coil module according to claim 1, wherein the coil is formed by winding a conducting wire.

9. The coil module according to claim 8, wherein a cross section of the conducting wire is in a shape of a circle, a square, or an ellipse.

10. The coil module according to claim 8, wherein the conducting wire is an enameled wire.

11. The coil module according to claim 8, wherein a connecting piece is disposed on the adapter plate, and an outlet end of the conducting wire is connected to the connecting piece.

12. The coil module according to claim 1, wherein a material of the magnetic conductive sheet is a single-layer or a plurality of layers of nano-crystals, a ferrite material, or silicon steel.

13. The coil module according to claim 1, wherein the magnetic conductive sheet is connected to the coil through an adhesive layer.

14. A coil packaging structure, comprising a housing, a coil module, and a protection component, wherein the coil module and the protection component are packaged in the housing, the housing comprises a first injection molded part and a second injection molded part that are connected to each other, the coil module is the coil module according to any one of claims 1 to 13, the magnetic conductive sheet is disposed on the first injection molded part, and the protection component is configured to isolate the coil from the second injection molded part, and the first injection molded part and the second injection molded part are formed by performing injection molding twice successively.

15. The coil packaging structure according to claim 14, wherein an accommodation groove is provided on the first injection molded part, the accommodation groove is configured to accommodate the coil module, and the magnetic conductive sheet is disposed on a bottom wall of the accommodation groove.

16. The coil packaging structure according to claim 15, wherein the protection component is disposed on a side of the coil module facing away from the first injection molded part, and covers the accommodation groove.

17. The coil packaging structure according to claim 15, wherein the protection component wraps the coil module, and the protection component is accommodated in the accommodation groove.

18. The coil packaging structure according to claim 17, wherein the protection component is formed outside the coil module through injection molding.

19. The coil packaging structure according to claim 17, wherein the protection component is formed outside the coil module by coating.

20. A wireless charging apparatus, wherein the wireless charging apparatus uses the coil packaging structure according to any one of claims 14 to 19.
